# EUROPEAN PATENT APPLICATION

(11) **EP 4 393 638 A1**
(43) Date of publication of application: **03.07.2024**
(21) Application number: 23220485.9
(22) Date of filing: 28.12.2023
(51) Int. Cl.: B23Q 3/06, B23Q 3/10, B25B 1/20

(54) **CLAMPING OF EXTRUDED PROFILES**

(30) Priority: 29.12.2022 BE 202206105
(71) Applicant: Alinel bv, 9900 Eeklo (BE)
(72) Inventor: De Paepe, Jan, 9900 Eeklo (BE)
(74) Representative: Brantsandpatents bv

(57) **Abstract**

The present invention relates to a clamping assembly for clamping an extruded profile with a contour on a milling machine, comprising: a fixed clamp, a movable clamp, and a die assembly, wherein the die assembly comprises two or more form blocks, wherein the form blocks are provided on a support plate, and wherein the form blocks are provided between the fixed and movable clamp, wherein the form blocks have a contour that is complementary to separate, non-contiguous, parts of the contour of the profile at rest, and wherein the clamps are configured to move the form blocks towards each other for the clamping engagement of the profiles. The invention also relates to a method for clamping an extruded profile on a milling machine.

## Description

### TECHNICAL FIELD

The invention relates to a clamping assembly for clamping an extruded profile. In a second aspect, the invention also relates to a method for clamping an extruded profile. In a third aspect, the invention also relates to a use of the clamping assembly for carrying out the method. In a fourth aspect, the invention also relates to a profile obtained according to this method.

### PRIOR ART

After a raw aluminum profile has been extruded, in many cases a mechanical process still needs to take place. There are many types of milling machines. Due to the enormous diversity of profiles and the associated operations, flexibility is important. This is necessary to quickly switch between the different programs that also need to be adjusted. Ideally, a profile is machined on all sides in one clamping operation.

The trend is to create increasingly complex profiles that basically also require deeper machining. An additional disadvantage here is that relatively long tools are required for drilling, milling or punching, which makes making the holes, either with a milling machine or a CNC machine, quite difficult to impossible.

Metalworking requires complex tools, which carries the risk that a slight angular deviation in the tool's position, due to inevitable manufacturing tolerances, can cause the positions to deviate from the desired position. For instance, when multiple holes need to be made at regular distances next to each other, these holes can result in an irregular jagged pattern wherein the holes, for example, are staggered in height relative to each other. This gives a bad impression in terms of quality of finish.

Milling machines are designed to clamp a flat profile and to machine it with the tool. Due to the trend of creating increasingly complex profiles, it is becoming more difficult to sufficiently clamp the profile with the available clamps.

For profiles of irregular shape, it is difficult to keep them in place during milling. The profiles will vibrate during milling and if they are not properly secured, they may come loose from the milling machine. In addition, imperfections can occur in milled openings, which must be removed manually. A person skilled in the art is inclined to secure the plates with weights on the milling machine.

NL2020554 describes a clamping mechanism for locally clamping a workpiece during a process with a machine that comprises a tool interacting with a first surface of the workpiece and exerting a process force on the workpiece. This extra clamp prevents vibration in a specific location, which is less suitable for processing long plates. Clamps are also discussed which, while interacting with the first surface, exert a clamping force on the workpiece to draw the workpiece towards the clamping mechanism.

The present invention aims to solve at least some of the above problems or drawbacks.

### SUMMARY OF THE INVENTION

To this end, the invention provides a device according to claim 1. The current solution to the above problems is to provide a clamping assembly comprising two or more form blocks, suitable for supporting and clamping complex profiles. As a result, the profile cannot come loose and will not vibrate. Due to the complex shape of the profiles and the constantly occurring variations in these shapes, the form blocks were provided on support plates, allowing for a different combination of form blocks on a support plate to be used for a different type of profile. Preferred forms of the device are presented in claims 2 to 7.

In a second aspect, the present invention concerns a method according to claim 8. This method has the advantage, inter alia, that the extruded profile is clamped from below, which allows for operations to be performed on the upper side. The extruded profile will vibrate less when operations are performed along the upper side. The extruded profile will not bend through when forces are applied along the top. Preferred forms of the method are described in the dependent claims 9 to 12.

In a third aspect, the present invention relates to a use according to claim 13. This use results in a firmly clamped profile in the clamping assembly. The clamping assembly is extremely suitable for easily being provided for many different profiles. The die assembly, comprising two or more form blocks and a support plate, can be easily replaced between different runs. If a part of the profile has a different shape than the profile of the previous run, one part of the form blocks can be changed and another part retained. A preferred form of use is described in dependent claim 14.

In a fourth aspect, the present invention concerns a profile according to claim 15. This profile has the advantage that it can be machined with a milling machine, despite its complex shape.

### DESCRIPTION OF THE FIGURES

**Figure 1** shows a schematic view along an axis perpendicular to the profile of an embodiment of the current invention.
**Figure 2** shows a schematic cross-section along an axis perpendicular to the profile of an embodiment of the present invention.

### DETAILED DESCRIPTION

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a", "an" and "the" refer to both the singular and the plural, unless the context presupposes otherwise. For example, "a segment" means one or more than one segment.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a clamping assembly for clamping an extruded profile with a contour, comprising: a fixed clamp, a movable clamp and a die assembly. In an embodiment, the die assembly comprises two or more form blocks. According to an embodiment, the form blocks are provided on a support plate. Because the form blocks are provided on a support plate, the form blocks are easily removable and replaceable by other form blocks if a profile with a different shape needs to be clamped by the clamping assembly. The clamping assembly is suitable for supporting and clamping complex profiles. As a result, the profile cannot come loose and start vibrating. Due to the complex shape of the profiles and the constantly occurring variations in these shapes, the form blocks were provided on support plates, allowing for a different combination of form blocks on a support plate to be used for a different type of profile. According to an embodiment, the form blocks are provided between the fixed and movable clamp.

According to an embodiment, the form blocks have a contour that is complementary to separate, non-contiguous, portions of the contour of the profile at rest. Because the mold blocks have a contour that is complementary to separate, non-contiguous, portions of the contour of the profile at rest, the profile rests stably on the form blocks. This provides a simple way of working where nothing has to be manually tightened or correctly positioned. The profile falls into the right place with light pressure.

According to an embodiment, the clamps are configured to move the form blocks towards each other for the clamping engagement of the profiles. The clamps are suitable for bringing the form blocks closer together. The profile that rests on the form blocks is thereby slightly compressed, causing it to be clamped by the form blocks. According to an embodiment, the average distance between the form blocks is 0.001-1 cm shorter in a compressed state than at rest.

According to an embodiment, the two or more form blocks are movably attached to the support plate, wherein the form blocks are at least movable in the clamping direction.

Because the two or more form blocks are movably attached to the support plate, they can move during compression. "Movably attached" here means that they are fastened to the support plate but can still move 0.1-10 cm in a free state. When the form blocks are compressed between the clamps, they can no longer be moved or move.

According to an embodiment, the form blocks comprise a first opening, and the support plate includes a protrusion with a second opening. According to an embodiment, the first and second openings are in line with each other and the clamp assembly includes a rod, provided through the first and second opening.

Because the form blocks include a first opening, and the support plate comprises a protrusion with a second opening, the form blocks can be attached to the support plate. The clamping assembly comprises a rod, suitable for insertion through the first and second opening. The first and second openings are in line with each other. According to an embodiment, the rod passes through a protrusion of the support plate and through an opening of a first form block. According to an embodiment, the rod passes through a protrusion of the support plate, through an opening of a first form block, and through an opening of a second form block. According to a further embodiment, the protrusion is located between the two form blocks.

According to an embodiment, the cross-section of the first opening has a smaller diameter than the cross-section of the second opening.

Because the diameter of the first opening is smaller than the diameter of the second opening, the form block is suitable to be attached movably to the support plate.

According to an embodiment, the die assembly comprises: two or more form blocks, a support plate, and a rod, wherein each form block comprises a first opening and wherein the support plate includes a protrusion with a second opening, wherein the cross-section of the first opening has a smaller diameter than the cross-section of the second opening and wherein the rod is adapted to secure at least 1 form block to the support plate. As a result, the form block is attached to the support plate but the form blocks remain movable. According to a further embodiment, two bolts are fastened to the distal ends of the rod. As a result, the form block is securely attached to the support plate but is still movable due to the different diameters of the openings.

According to another embodiment, the distance from the first opening to the underside of the form block, i.e., the side resting on the support plate, is less than the distance from the second opening to the surface of the support plate on which the form block rests. Because this distance varies, the form block can wobble, rotating a few degrees. This has the advantage that the profile is pulled downwards when the clamps are pressed together. According to another embodiment, the form block is attached to the support plate wherein the form block can wobble and can shift.

According to an embodiment, the form block comprises at least two bulges and two notches.

Because the form block comprises at least two bulges and two notches, it is well suited to clamp the profile.

According to an embodiment, the bulges and notches have angles between 70-100°, preferably between 85 and 95°.

Because the bulges and notches have angles between 70-100°, preferably between 85 and 95°, they are well suited to clamp the profile. If the angles were to be less than 60°, it would be more difficult for the form blocks to clamp the profile.

According to an embodiment, the profiles are 0.01-10 cm thick, preferably 0.1-1 cm. According to an embodiment, the contour of the die assembly comprises 10-50 angles. According to an embodiment, the extruded profile includes a protrusion, adapted to be clamped between the form blocks. According to an embodiment, the protrusion is 0.1-5 cm thick and 0.5-5 cm deep, along the length of the profile. According to an embodiment, the profile is rectangular in shape and comprises at least 1 bulge and at least 1 notch that extend over the entire length, preferably 3-20 bulges and 3-20 notches, more preferably the bulges and notches have substantially right angles.

According to an embodiment, the contour of the form block comprises 2-50 bends, wherein the bends are 70-100°, preferably 85-95°, more preferably the form block comprises 5-20 bends.

According to an embodiment, the form blocks are made of a plastic, preferably polyamide.

Since form blocks are made of a plastic, preferably polyamide, they possess an optimal combination of mechanical strength, stiffness, impact resistance, mechanical damping, and wear resistance. A good electrical insulating capacity and chemical resistance make it suitable for simple construction and maintenance of the form blocks.

In a second aspect, the invention relates to a method for clamping an extruded profile with a contour on a milling machine, comprising:
a. providing two or more form blocks on a support plate, wherein the form blocks have a contour that is complementary to separate, non-contiguous, parts of the contour of the profile at rest;
b. placing the extruded profile on the two or more form blocks;
c. the compression of the two or more form blocks between a fixed clamp and a movable clamp.

According to an embodiment, the compression of the two or more form blocks by the fixed and movable clamp brings at least partially the two or more form blocks closer together for the clamping engagement of the profiles.

Since the extruded profile is clamped from below, operations can be performed on the upper side. The extruded profile will vibrate less when operations are performed along the upper side. The extruded profile will not bend through when forces are applied along the top. According to an embodiment, 2-10 support plates are provided. According to an embodiment, a support plate is provided on average every 0.3-2.0 m. According to an embodiment, 2-10 form blocks are provided on a support plate, preferably 3-8, more preferably 6.

According to an embodiment, the extruded profile can rest on the form blocks and make good contact. This is necessary to be able to clamp well in the form blocks.

According to an embodiment, the compression of the two or more form blocks by the fixed and movable clamp brings at least partially the two or more form blocks closer together. This ensures that the extruded profile is clamped in place and will not shift unexpectedly during milling.

According to an embodiment, the form blocks shift 0.001-10 mm when they are clamped together. According to an embodiment, parts of the first form block shift 0.001-10 mm relative to the third form block, preferably 0.1-3 mm, more preferably 0.1-1 mm. Because parts of the first form block shift relative to the third form block, the extruded profile is well clamped between the form blocks and will not shift unintentionally during milling. According to an embodiment, the form blocks are more compressed along the side where they make contact with the profile than the opposite side.

This method has the advantage that it is very easy to clamp the profile. Provide suitable form blocks, lay the profile on them and tighten the clamps. Due to the shape of the form blocks and the profile, at least a part of the profile is clamped between the form blocks and can no longer vibrate during milling.

According to an embodiment, various support plates with provided form blocks are used, depending on the contour of the extruded profile that needs to be clamped.

According to an embodiment, the method comprises the step of: removing a first support plate with a first set of at least two form blocks; and providing a second support plate with a second set of at least two form blocks, wherein the form blocks are selected depending on the extruded profile that needs to be clamped.

Because different support plates with form blocks provided thereon are available, depending on the shape of the extruded profile that needs to be clamped, the form blocks can be easily changed. Profiles with a complex yet repetitive structure need to be processed. These are difficult to secure, but for many different shapes, various form blocks are available, compatible with the different profiles. According to an embodiment, the support plates and attached form blocks form one whole and are not partially exchanged. A complete support plate with accompanying form blocks will be replaced by another support plate with accompanying form blocks.

According to an embodiment, the two or more form blocks on the support plate move at least partially towards each other when the two or more form blocks are compressed between a fixed clamp and a movable clamp.

Due to the fact that the two or more form blocks on the support plate move at least partially towards each other when the two or more form blocks are compressed between a fixed clamp and a movable clamp, the profile is clamped by the form blocks. According to an embodiment, the fixed clamp and movable clamp apply a pressure of 10-2000 N on the form blocks. According to a further embodiment, the pressure on the side that is in contact with the profile is stronger than on the opposite side.

According to an embodiment, during the compression of the two or more form blocks between a fixed clamp and a movable clamp, the two or more form blocks come closer together on the side where they support the extruded profile than on the opposite side.

Because during the compression of the two or more form blocks between a fixed clamp and a movable clamp, the two or more form blocks come closer together on the side where they support the extruded profile than on the opposite side, the profile is pulled into the form blocks. As a result, the profile is secured in the form blocks, and a small change in the position of the form blocks can lead to a significant change in the degree of gripping.

According to an embodiment, the extruded profile rests stably on the form blocks before the clamping of the two or more form blocks between a fixed clamp and a movable clamp.

Because the extruded profile rests stably on the form blocks before the clamping of the two or more form blocks between a fixed clamp and a movable clamp, there is contact between the profile and the form blocks. According to an embodiment, the profile rests on 3-100 form blocks, preferably 12-100 form blocks before the clamping of all these form blocks between a fixed clamp and a movable clamp.

According to an embodiment, the profile rests on form blocks across its entire width and at intervals of 0.2-2.0 meters along its length, preferably every 0.4-1.0 meters. According to an embodiment, there is no contact between the fixed and movable clamp and the profile.

In a third aspect, the invention relates to a use of the clamping assembly as described herein, for performing the method as described herein. The clamping assembly is extremely suitable for easily being provided for many different profiles. The die assembly, comprising two or more form blocks and a support plate, can be easily replaced between different runs.

According to an embodiment, the clamping assembly is used for milling openings in an extruded profile. During milling, a workpiece is processed, which can lead to substantial vibrations, which can lead to inaccuracies and noise nuisance. The use of the clamping assembly reduces these disadvantages. The use is simple and suitable for large plate-shaped profiles with a corrugated surface.

In a fourth aspect, the invention relates to a profile obtained according to the method described herein.

In what follows, the invention is described by means of non-limiting figures illustrating the invention, which are not intended or should be interpreted to limit the scope of the invention.

### DESCRIPTION OF THE FIGURES

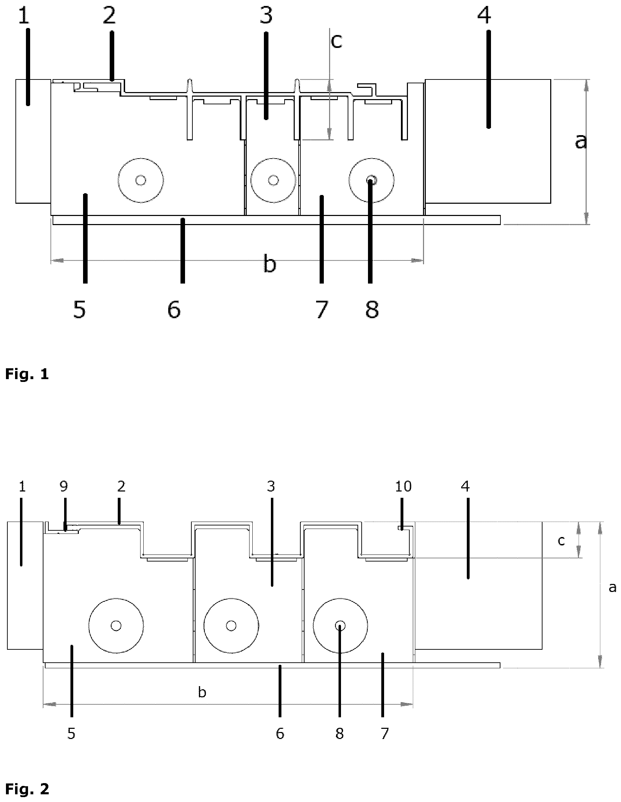

**Figure 1** shows a schematic cross-sectional view along an axis perpendicular to the profile of an embodiment of the current invention.

The clamping assembly comprises a fixed clamp (1), a movable clamp (4), a first form block (3), a second form block (5) and a third form block (7). The distance b represents the width of the three form blocks and amounts to 190-210 mm.

The form blocks are provided on a support plate (6). The profile (2) is suitable for being clamped by the compressed form blocks. The profile includes bulges which can at least partially be used to be placed between two form blocks. Distance c indicates the length of a bulge and measures 30-36 mm.

A rod (8) passes through an opening in the third form block (7), which secures the form block to the support plate (6). Distance a indicates the height of the support plate (6), the form blocks, and clamps as depicted herein. The distance a is 75-85 mm.

**Figure 2** shows a schematic cross-section along an axis perpendicular to the profile of an embodiment of the present invention.

The clamping assembly comprises a fixed clamp (1), a movable clamp (4), a first form block (3), a second form block (5) and a third form block (7). The distance b represents the width of the three form blocks and amounts to 190-210 mm.

The form blocks are provided on a support plate (6). The profile (2) is suitable for being clamped by the compressed form blocks. The profile includes bulges which can at least partially be used to be placed between two form blocks. Distance c indicates the length of a bulge and is 15-25 mm.

A rod (8) passes through an opening in the third form block (7), which secures the form block to the support plate (6). Distance a indicates the height of the support plate (6), the form blocks, and clamps as depicted herein. The distance a is 75-85 mm.

The profile further comprises a female intrusion (9) and a male protrusion (10), which allows several of these profiles to be slid into each other to thus form a wall. The female intrusion (9) includes small barbs to prevent the profiles from easily disengaging once interlocked.

## Claims

1. A clamping assembly for clamping an extruded profile with a specific contour on a milling machine, comprising: a fixed clamp, a movable clamp, and a die assembly, wherein the die assembly comprises two or more form blocks, wherein the form blocks are provided on a support plate, and wherein the form blocks are provided between the fixed and movable clamp, **characterized in that** the form blocks have a contour that is complementary to separate, non-contiguous, parts of the contour of the profile at rest, and wherein the clamps are configured to move the form blocks towards each other for the clamping engagement of the profiles.

2. The clamping assembly according to claim 1, wherein the two or more form blocks are movably attached to the support plate, wherein the form blocks are at least movable in the clamping direction between the fixed and movable clamp.

3. The clamping assembly according to claim 1 or 2, wherein the form blocks comprise a first opening, and the support plate comprises a protrusion with a second opening, wherein the first and second openings are in line with each other and wherein the clamping assembly comprises a rod, provided through the first and second opening.

4. The clamping assembly according to claim 3, wherein the cross-section of the first opening has a smaller diameter than the cross-section of the second opening.

5. The clamping assembly according to any one of the preceding claims 1 up to and including 4, wherein the form block comprises at least two bulges and two notches.

6. The clamping assembly according to claim 5, wherein the bulges and notches have angles between 70-100°, preferably between 85 and 95°.

7. The clamping assembly according to any one of the preceding claims 1 up to and including 6, wherein the form blocks are made of a plastic, preferably of polyamide.

8. Method for clamping an extruded profile with a contour on a milling machine, comprising:
a. providing two or more form blocks on a support plate, wherein the form blocks have a contour that is complementary to separate, non-contiguous, parts of the contour of the profile at rest;
b. placing the extruded profile on the two or more form blocks;
c. the compression of the two or more form blocks between a fixed clamp and a movable clamp,
**characterized in that** the compression of the two or more form blocks by the fixed and movable clamp at least partially brings the two or more form blocks closer together for the clamping engagement of the profiles.

9. The method according to claim 8, comprising the step of: removing a first support plate with a first set of at least two form blocks; and providing a second support plate with a second set of at least two form blocks, wherein the form blocks are selected depending on the extruded profile that needs to be clamped.

10. The method according to claim 8 or 9, wherein the two or more form blocks on the support plate move at least partially towards each other when the two or more form blocks are compressed between a fixed clamp and a movable clamp.

11. The method according to claim 10, wherein during the compression of the two or more form blocks between a fixed clamp and a movable clamp, the two or more form blocks come closer together on the side where they support the extruded profile than on the opposite side.

12. The method according to any one of the preceding claims 8 up to and including 11, wherein the extruded profile rests stably on the form blocks before the clamping of the two or more form blocks between a fixed clamp and a movable clamp.

13. Use of the clamping assembly according to any one of the preceding claims 1 up to and including 7, for performing the method according to any one of the preceding claims 8 up to and including 12.

14. Use of the clamping assembly according to any one of the preceding claims 1 up to and including 7, for milling openings in an extruded profile.

15. A profile obtained using the method according to any one of the previous claims 8 up to and including 12.
